# EUROPÄISCHE PATENTSCHRIFT

(11) **EP 1 185 472 B1**
(45) Veröffentlichungstag und Bekanntmachung des Hinweises auf die Patenterteilung: **02.01.2003**
(21) Anmeldenummer: 00906360.3
(22) Anmeldetag: 19.02.2000
(51) Int. Cl.: B65G 25/02, B29C 45/26, B29D 17/00, B65G 47/90, G11B 7/26

(54) **VORRICHTUNG ZUM TRANSPORTIEREN UND GLEICHZEITIGEN KÜHLEN VON SUBSTRATEN FÜR INFORMATIONSTRÄGERSCHEIBEN WIE CD, DVD ODER DERGLEICHEN**
DEVICE FOR CONVEYING AND SIMULTANEOUSLY COOLING SUBSTRATES FOR INFORMATION STORAGE DISCS SUCH AS A CD, DVD OR THE LIKE
DISPOSITIF POUR L'ACHEMINEMENT ET LE REFROIDISSEMENT SIMULTANE DE SUBSTRATS POUR DES DISQUES SUPPORTS D'INFORMATIONS TELS QUE CD, DVD OU OBJETS SIMILAIRES

(30) Priorität: 23.02.1999 DE 19907210
(43) Veröffentlichungstag der Anmeldung: 13.03.2002
(73) Patentinhaber: Krauss-Maffei Kunststofftechnik GmbH, 80997 München (DE)
(72) Erfinder: EICHLSEDER, Martin, D-94167 Tettenweis (DE)
(74) Vertreter: Zollner, Richard
(86) Internationale Anmeldenummer: EP0001388
(87) Internationale Veröffentlichungsnummer: WO00050321

(56) Entgegenhaltungen:
- EP-A- 0 509 235
- EP-A- 0 860 259
- WO-A-97/35720
- WO-A-99/24977
- GB-A- 1 508 748

## Beschreibung

Die Erfindung betrifft eine Vorrichtung zum Transportieren und gleichzeitigen Kühlen von scheibenförmigen Substraten gemäß den Oberbegriffen der nebengeordneten Patentansprüche 1 und 9. Das bevorzugte Anwendungsgebiet der vorliegenden Erfindung ist die Herstellung von optischen Informationsträgerscheiben aus Kunststoffen mit Spritzgießmaschinen und hierbei insbesondere der Transport und die Kühlung von spritzgegossenen DVD-(Digital Versatile Disc)-Substraten zur Metallisierungsstation und weiter zur Bondingstation. Für die sich daran anschließenden Transporte zu weiteren Bearbeitungsstationen kann die vorliegende Erfindung ebenfalls eingesetzt werden, wenn eine zusätzliche Kühlung erforderlich ist. Es versteht sich von selbst, daß die Erfindung auch bei der Herstellung anderer Informationsträgerscheiben wie CD, CD-R oder dergleichen eingesetzt werden kann, sowie für andere als spritzgegossene scheibenförmige Erzeugnisse verwendbar ist.

Für den Transport von spritzgegossenen DVD-Substraten ist der sogenannte "Walking Beam" bekannt. Hierbei handelt es sich um ein Transportsystem, bei dem ein horizontal feststehender und vertikal bewegbarer Transportbalken (sogenannter "Beam") mit einem koaxial zu diesem Transportbalken angeordneten und in Längsrichtung bewegbaren Transportrahmen (sogenannter "Walk") wie folgt zusammenwirkt. Der Transportbalken ist mit einer Reihe von im wesentlichen zylinderförmigen, mit Zentrierpins ausgestatteten Trägern bestückt, auf denen die DVD-Substrate abgelegt werden, wobei jeweils der Zentrierpin die zentrische Ausnehmung in dem DVD-Substrat durchstößt. Zum Transportieren werden durch eine Abwärtsbewegung des Transportbalkens zunächst die auf den Trägern aufliegenden DVD-Substrate auf dem Transportrahmen abgelegt und nachfolgend die Zentrierpins nach unten aus den zentrischen Ausnehmungen der DVD-Substrate herausgefahren. Der Transportrahmen kann nun um eine vorgebbare Anzahl von Stationen in Längsrichtung bewegt werden, bis die Reihe von DVD-Substraten so über dem Transportbalken positioniert sind, daß sich die zentrischen Ausnehmungen der DVD-Substrate wieder genau über Zentrierpins befinden. Durch eine Aufwärtsbewegung des Transportbalkens greifen die Zentrierpins in die Ausnehmungen der DVD-Substrate und der Transportbalken mit den Trägern hebt diese vom Transportrahmen ab. Der Transportrahmen (Walk) wird nun in die entgegengesetzte Richtung in seine Ausgangsposition zurückbewegt und der Zyklus beginnt von neuem, d.h. der Transportbalken (Beam) beginnt mit der nächsten Abwärtsbewegung und so fort. Das Abkühlen der DVD-Substate erfolgt durch Wärmeabgabe an die Umgebung während des Transports, so daß geeignet lange Transportstrecken vorzusehen sind, damit die DVD-Substrate eine genügend lange Zeit der Umgebungstemperatur ausgesetzt sind.

Es ist außerdem bekannt, zum Transportieren von CD's diese über eine Platte auf einem Luftkissen mit einer vorgegebenen Strömungsrichtung zu befördern (sogenannter "Airtrack"). Dabei besteht die Gefahr, daß bei nachlassender Luftzufuhr die CD's mit ihrer Unterseite an die Platte anstoßen und daher mit Beschädigungen zu rechnen ist. Dies gilt insbesondere dann, wenn CD's von Hand zu Testzwecken entnommen werden, da an dieser Stelle die Luft ungehindert entweichen kann und es zu einem Druckabfall in den übrigen Bereichen kommt. Da die CD's sehr dicht über der Platte liegen, ist zudem das Greifen von Hand schwierig. Außerdem erfolgt eine Abkühlung der CD's während des Transports in äußerst unsymmetrischer Weise, da die dem Luftkissen zugewandte Seite der CD wesentlich stärker gekühlt wird als ihre Oberseite. Bei CD's mag dies weniger kritisch sein; hingegen ist bei DVD-Substraten eine möglichst gleichmäßige Abkühlung vorteilhaft, damit jeweils zwei zusammengehörige DVD-Substrate sauber und fehlerfrei zu einer DVD zusammengefügt werden können.

Der Erfindung liegt das Problem zugrunde, eine Vorrichtung anzugeben, mit der Substrate von Informationsträgerscheiben nach deren Herstellung zu nachfolgenden Bearbeitungsstationen transportiert und während des Transports mit einem Kühlgas beaufschlagt werden können.

Die Lösung dieser Aufgabe erfolgt durch Vorrichtungen mit den Merkmalen der nebengeordneten Patentansprüche 1 und 9. Vorteilhafte Ausgestaltungen und Weiterentwicklungen sind mit den Merkmalen der Unteransprüche 2 bis 8 und 10 bis 16 angegeben. Der wesentliche Vorteil der vorliegenden Erfindung liegt darin, daß kurze Transportwege zwischen den Bearbeitungsstationen, insbesondere auf dem Weg von der Entnahme der Substrate aus der Spritzgießform bis zur Bondingstation, vorgesehen werden können und eine eigene Kühlstation entfallen kann. Damit ist insgesamt ein kompakterer Aufbau der gesamten Produktionsanlage möglich, so daß weniger Stellfläche benötigt wird.

Durch die gleichzeitige Kühlgaszufuhr oberhalb und unterhalb der Substrate (Unteransprüche 4 und 11)werden beide Oberflächen des Substrats äußerst gleichmäßig gekühlt, so daß ein Verbiegen der Substrate aufgrund unsymmetrischer Kühlung von Ober- und Unterseite weitgehend vermieden wird. Diese Art der Kühlgaszufuhr hat den zusätzlichen Vorteil, daß die Substrate fest auf dem Träger aufliegen, da aufgrund der Strömung des Kühlgases eine gewisse Arretierung auf dem Träger gegeben ist, insbesondere bei der radial von innen nach außen zum Rand der Substrate gerichteten Strömung des Kühlgases bei den Ausgestaltungen gemäß den Unteransprüchen 5,6,12 und 13, die sich zudem durch eine vergleichsweise einfache Herstellung der mit den Kanälen ausgestatten Träger auszeichnen. Die Ausführungsform nach dem Walking Beam Prinzip (Patentansprüche 1 bis 8) bietet den speziellen Vorteil, das Kühlgas über eine Sammelleitung den Trägern und weiter den Substraten zuzuleiten, so daß die Kühlgaszufuhr nach den jeweiligen Anforderungen so gesteuert werden kann, daß der höhere Druck des Kühlgases beim Eintritt in die Sammelleitung am Ende oder am Anfang der Transportstrecke bereitgestellt wird. Für eine schonende Kühlung eines gerade der Spritzgießform entnommenen Substrats empfiehlt es sich, das Kühlgas entgegen der Transportrichtung in die Sammelleitung einströmen zu lassen. Demgegenüber besitzt die Ausführungsform nach dem Airtrack-Prinzip (Patentansprüche 9 bis 16) den speziellen Vorteil, daß mechanische Teile und Ventile wie beim Walking-Beam-Prinzip entfallen können, da das Kühlgas dem für den Transport vorgesehenen Gaskissen entnommen wird, wodurch Raum für sonstige Einrichtungen der Produktionslinie eingespart wird.

Nachfolgend soll die Erfindung anhand von Ausführungsbeispielen und unter Bezugnahme auf die Figuren näher erläutert werden. Es zeigen:
- Fig.1: Ausschnitt aus einem Transportsystem nach dem Walking-Beam-Prinzip mit zusätzlichen Einrichtungen zur Kühlgaszufuhr;
- Fig.2: Aufsicht auf den in Fig.1 dargestellten Teil des Walking-Beam-Transportsystems;
- Fig.3: Aufsicht auf einen Träger mit angedeuteten Kanälen für das Kühlgas;
- Fig.4: Querschnitt durch einen Träger eines Walking-Beam-Transportsystems mit Schnitt entlang der Linie A-A in Fig.3;
- Fig.5: Ausschnitt aus einem Transportsystem nach dem Airtrack-Prinzip mit zusätzlichen Einrichtungen zur Kühlgaszufuhr;
- Fig.6: Aufsicht auf den in Fig.5 dargestellten Teil des Airtrack-Transportsystems;
- Fig.7: Aufsicht auf einen Träger mit angedeuteten Kanälen für das Kühlgas;
- Fig.8: Querschnitt durch einen Träger eines Airtrack-Transportsystems mit Schnitt entlang der Linie A-A in Fig.7

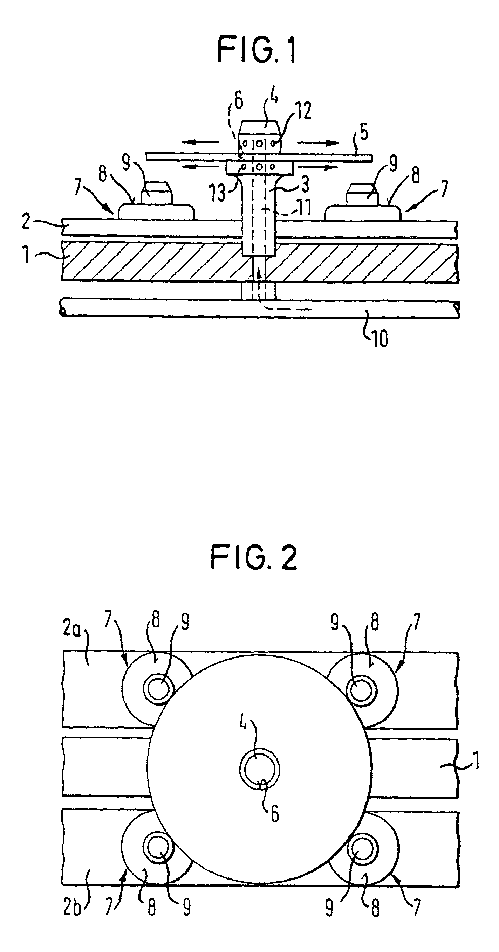

Fig.1 und Fig.2 zeigen einen Ausschnitt aus einem Transportsystem nach dem Walking-Beam-Prinzip mit zusätzlichen Einrichtungen zur Kühlgaszufuhr in Seitenansicht und in Aufsicht. Ein komplettes Walking-Beam-Transportsystem besteht aus einer Vielzahl von Einheiten der in Fig.1 bzw. 2 dargestellten Art. Die genaue Anzahl richtet sich nach der Länge der Transportstrecke. Dieses Transportsystem besteht aus einem horizontal feststehenden und vertikal bewegbaren Transportbalken 1 (sogenannter "Beam") und einem koaxial zu diesem Transportbalken angeordneten und in Längsrichtung bewegbaren Transportrahmen 2 (sogenannter "Walk"). Dieser weist im wesentlichen zwei balkenartige Elemente 2a und 2b auf, die in Aufsicht (siehe Fig.2) links und rechts des Transportbalkens 1 angeordnet sind. Auf den balkenartigen Elementen 2a und 2b sind Halteelemente 7 angeordnet, die jeweils über eine Auflagefläche 8 für das DVD-Substrat 5 und seitliche Fixierpins 9 verfügen. Durch die Teilschnittdarstellung in Fig.1 ist dort nur das hintere (linke oder rechte) Element des Transportrahmens 2 dargestellt. Der Transportbalken 1 ist mit einer Reihe von im wesentlichen zylinderförmigen, mit Zentrierpins 4 ausgestatteten Trägern 3 bestückt, auf denen die DVD-Substrate 5 abgelegt werden, wobei jeweils der Zentrierpin 4 die zentrische Ausnehmung 6 in dem DVD-Substrat durchstößt. Zum Transportieren werden durch eine Abwärtsbewegung des Transportbalkens 1 zunächst die auf den Trägern 3 aufliegenden DVD-Substrate 5 auf den Auflageflächen 8 der Halteelemente 7 des Transportrahmens 2 abgelegt und nachfolgend die Zentrierpins 4 nach unten aus den zentrischen Ausnehmungen 6 der DVD-Substrate 5 herausgefahren. Der Transportrahmen 2 wird nun in der Regel eine Station in Längsrichtung bewegt, bis die Reihe von DVD-Substraten 5 so über dem Transportbalken 1 positioniert sind, daß sich die zentrischen Ausnehmungen 6 der DVD-Substrate 5 wieder genau über dem in der Regel benachbarten Träger 3 und dessen Zentrierpin 4 befinden. Durch eine Aufwärtsbewegung des Transportbalkens 1 greifen die Zentrierpins 4 in die Ausnehmungen 6 der DVD-Substrate 5 und der Transportbalken 1 mit den Trägern 3 hebt diese vom Transportrahmen 2 ab. Der Transportrahmen (Walk) wird nun in die entgegengesetzte Richtung in seine Ausgangsposition zurückbewegt und der Zyklus beginnt von neuem, d.h. der Transportbalken (Beam) beginnt mit der nächsten Abwärtsbewegung und so fort. Zum Kühlen der DVD-Substrate 5 wird eine Kühlgas, zum Beispiel Luft, über eine Sammelleitung 10 den Trägern 3 zugeführt. Über einen zentralen Kanal 11 wird das Kühlgas aus der Sammelleitung 10 zu mehreren Abzweigungen 12 und 13 geleitet, die oberhalb und unterhalb des Substrats 5 radial aus dem Zentrierpin 4 und dem Träger 3 austreten. Das Kühlgas strömt radial von innen zum Rand des DVD-Substrats 5. Durch die gleichzeitige Beaufschlagung der Ober- und der Unterseite des DVD-Substrats 5 wird einerseits eine symmetrische Kühlung erreicht und andererseits besitzt das DVD-Substrat 5 strömungsbedingt durch eine Art Venturieffekt eine stabile Lage. Mittels einer hier nicht dargestellten Steuerung wird die Kühlgaszufuhr so eingestellt, daß nur dann eine Kühlgaszufuhr erfolgt, wenn die DVD-Substrate 5 auf den Trägern 3 aufliegen, also nicht während des Weitertransports durch den Transportrahmen 2.

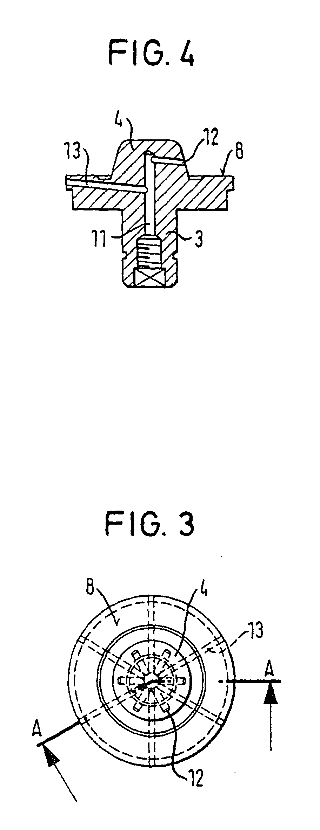

In Fig.3 sind die in dem Träger 3 oberhalb und unterhalb des DVD-Substrats verlaufenden Kanäle 12 und 13 eingezeichnet. Die hier dargestellte Ausführungsform eines Trägers 3 verfügt über sechs Kanäle 12 oberhalb und sechs Kanäle 13 unterhalb des DVD-Substrats, die um einen Winkel von 30° zueinander versetzt sind. Sie können aber auch, wie in Fig.1 ersichtlich, ohne Versatz übereinander liegend angeordnet werden. Die Querschnittsdarstellung gemäß Fig.4 mit dem Schnitt entlang der Linie A-A in Fig.3 zeigt die Lage des zentralen Kanals 11 und die davon radial nach außen abgehenden Abzweigungen 12 und 13. Es hat sich als vorteilhaft erwiesen, wenn die Abzweigungen leicht schräg auf das DVD-Substrat zulaufend ausgebildet sind, wie dies in Fig.4 der Fall ist. Ein Winkel von ungefähr 5° zwischen der Auflagefläche und den Abzweigungen hat sich in der Praxis bei DVD-Substraten bewährt. Es bleibt dem Fachmann überlassen, für jeden Anwendungsfall den am geeignetsten Winkel zu ermitteln.

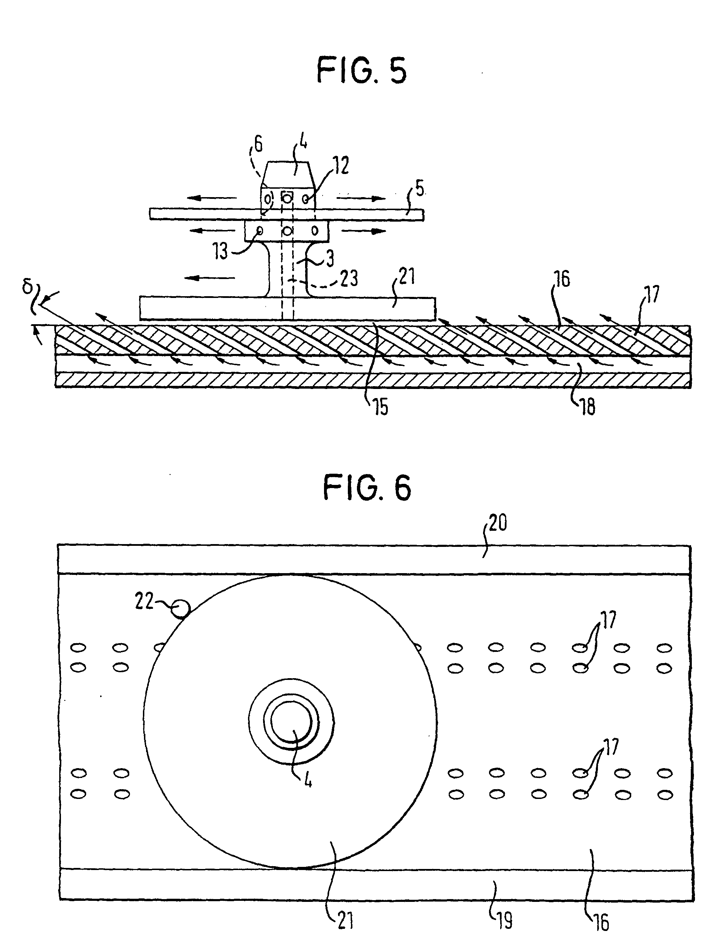

Ein nach dem Airtrack-Prinzip arbeitendes Tranportsystem mit zusätzlicher Kühleinrichtung wird nachfolgend anhand der Fig.5 bis 8 näher erläutert. Zur Erzeugung eines Luftkissens 15 weist eine Platte 16 eine Vielzahl von Luftzuführkanälen17 auf, die mit einem oder mehreren im Boden der Platte 16 verlaufenden Luftkanälen 18 in Verbindung stehen. Letztere sind an eine zentrale Luftzufuhreinheit angeschlossen. Durch eine geeignete Schrägstellung der Luftzuführkanäle 17 erhält das Luftpolster 15 eine bevorzugte Strömungsrichtung und die Träger 3, von denen hier nur ein Exemplar dargestellt ist, werden in die durch einen Pfeil in Fig.5 dargestellte Transportrichtung bewegt. Je flacher der Winkel δ ist, den die Zuführkanäle 17 mit der Plattenoberfläche einschließen, um so größer ist die Geschwindigkeit, mit der die Träger 3 sich in Transportrichtung bewegen. Die Geschwindigkeit läßt sich zusätzlich durch den Luftdruck variieren. Aus der Aufsicht in Fig.6 ist ersichtlich, daß die Platte 16 über seitliche Anschlagleisten 19 und 20 verfügt, so daß der Airtrack einen im wesentlichen U-förmigen Querschnitt aufweist und die seitliche Führung der Träger 3 gewährleistet. Die Platte 16 verfügt in dem hier dargestellten Ausführungsbeispiel über vier Reihen mit Luftzuführkanälen 17, von denen jeweils zwei links und zwei rechts symmetrisch zur Achse des Airtracks verlaufen. Der Durchmesser des tellerartigen Fuß 21 des Trägers 3 hängt unter anderem von der Anzahl der Luftzuführkanäle 17 pro Flächeneinheit, dem erzeugten Luftdruck, seinem Eigengewicht und dem Gewicht des aufliegenden Substrats ab. Der Abstand der U-Schenkel, also der seitlichen Anschlagleisten 19 und 20, ist so einzustellen, daß die Träger 3 während des Transports nicht verklemmen können. Zum Anhalten der Träger 3, beispielsweise zur Weitergabe der DVD-Substrate 5 an eine nächste Bearbeitungsstation, sind ein- und ausfahrbare Anschlagbolzen 22 in der Platte 16 vorgesehen. Zur Kühlung des DVD-Substrats 5 ist in dem Träger 3 ein zentraler, vertikal verlaufender Kanal 23 vorgesehen, der an der Unterseite des tellerartigen Fuß 21 beginnt und der bis in den Zentrierpin 4 reicht. Von diesem Kanal 23 gehen oberhalb und unterhalb des DVD-Substrats 5 Abzweigungen 12 und 13 radial nach außen ab und treten aus dem Zentrierpin 4 und dem Träger 3 heraus. Die Kühlluft stammt aus dem Luftkissen 15 und strömt von dort über den zentralen Kanal 23 und die Abzweigungen 12 und 13 zu deren Austrittsöffnungen oberhalb und unterhalb des DVD-Substrats 5 und nachfolgend radial von innen nach außen zum Rand des DVD-Substrats 5. Wie beim Walking-Beam-System wird auch hier durch die gleichzeitige Beaufschlagung der Ober- und der Unterseite des DVD-Substrats 5 einerseits eine symmetrische Kühlung erreicht und andererseits besitzt das DVD-Substrat 5 strömungsbedingt durch eine Art Venturieffekt eine stabile Lage.

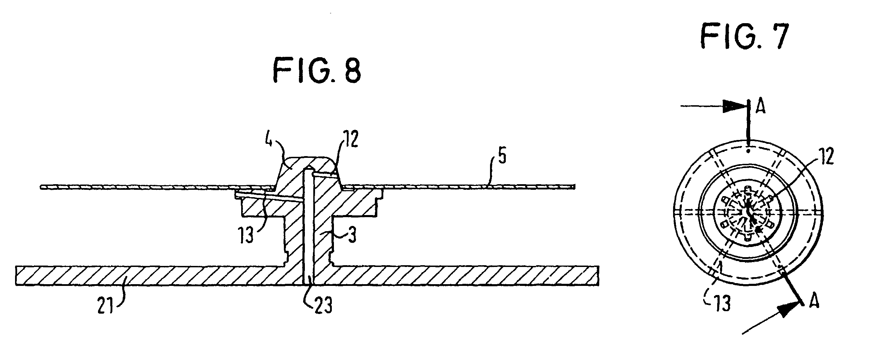

In Fig.7 sind die in dem Träger 3 oberhalb und unterhalb des DVD-Substrats verlaufenden Kanäle 12 und 13 eingezeichnet. Die hier dargestellte Ausführungsform eines Trägers 3 verfügt wie beim Walking-Beam-System über sechs Kanäle 12 oberhalb und sechs Kanäle 13 unterhalb des DVD-Substrats, die um einen Winkel von 30° zueinander versetzt sind. Sie können aber auch, wie in Fig.5 ersichtlich, ohne Versatz übereinander liegend angeordnet werden. Die Querschnittsdarstellung gemäß Fig.8 mit dem Schnitt entlang der Linie A-A in Fig.7 zeigt die Lage des zentralen, an der Unterseite des tellerartigen Fuß 21 beginnenden Kanals 23, und die davon oberhalb und unterhalb des DVD-Substrats 5 radial nach außen abgehenden Abzweigungen 12 und 13. Es hat sich als vorteilhaft erwiesen, wenn die Abzweigungen leicht schräg auf das DVD-Substrat zulaufend ausgebildet sind, wie dies in Fig.8 der Fall ist. Ein Winkel von ungefähr 5° zwischen der Aufiagefläche und den Abzweigungen ist empfehlenswert.

### Bezugszeichenliste

- 1: Transportbalken
- 2: Transportrahmen
- 2a,2b: balkenförmige Seitenteile des Transportrahmens
- 3: Träger
- 4: Zentrierpin
- 5: DVD-Substrat
- 6: zentrische Ausnehmung im DVD-Substrat
- 7: Halteelemente
- 8: Auflagefläche
- 9: Fixierpin
- 10: Sammelleitung für Kühlgas
- 11: zentraler Kanal
- 12: obere Abzweigungen
- 13: untere Abzweigungen
- 14: unbesetzt
- 15: Luftkissen
- 16: Platte
- 17: Luftzufuhrkanäle
- 18: Luftkanal
- 19,20: Anschlagleisten
- 21: tellerartiger Fuß des Trägers 3
- 22: Anschlagbolzen
- 23: zentraler Kanal

## Patentansprüche

1. Vorrichtung zum Transportieren und Kühlen von scheibenförmigen Substraten (5), insbesondere von Substraten für Informationen tragende Kunststoffscheiben wie CD, DVD oder dergleichen, mit einem mit Trägern (3) für die Substrate (5) ausgestattetenTransportbalken (1) sowie einem Transportrahmen (2, 2a, 2b), die relativ zueinander horizontal und vertikal bewegbar sind, wobei die Substrate (5) bei der Vertikalbewegung im Wechsel auf den Trägern (3) und auf dem Transportrahmen (2, 2a, 2b) liegen, und wobei der Transport der Substrate (5) durch die Horizontalbewegung erfolgt,
**dadurch gekennzeichnet,**
**daß** die Träger (3) mit Leitungen (11, 12, 13) für ein Kühlgas versehen sind und daß diese Leitungen an eine zentrale Kühlgaszufuhr angeschlossen sind,

2. Vorrichtung nach Anspruch 1,
**dadurch gekennzeichnet,**
**daß** die Leitungen (11, 12, 13) der Träger (3) an eine Sammelleitung (10) angeschlossen sind, die am Transportbalken (1 ) angebracht oder als Sammelkanal innerhalb des Transportbalkens ausgebildet ist.

3. Vorrichtung nach Anspruch 2,
**dadurch gekennzeichnet,**
**daß** es sich bei den Leitungen (11, 12, 13) der Träger (3) um in den Trägern verlaufende Kanäle (11, 12, 13) handelt, die im Bereich der Auflagefläche der Substrate (5) aus der Oberfläche austreten und im Bodenbereich der Träger (3) mit der Sammelleitung (10) in Verbindung stehen.

4. Vorrichtung nach einem der Ansprüche 1 bis 3,
**dadurch gekennzeichnet,**
**daß** die Träger (3) jeweils einen Zentrierpin (4) aufweisen, der in eine entsprechend ausgebildete Ausnehmung (6) in den Substraten (5) paßt und daß Austrittsöffnungen für das Kühlgas jeweils oberhalb und unterhalb des Substrats (5) vorgesehen sind.

5. Vorrichtung nach Anspruch 4,
**dadurch gekennzeichnet,**
**daß** in den Trägern (3) jeweils ein zentraler Kanal (11) vorgesehen ist, von dem Abzweigungen (12, 13) in dem Zentrierpin (4) oberhalb des Substrats (5) und in dem Träger (3) unterhalb des Substrats (5) radial nach außen verlaufen.

6. Vorrichtung nach Anspruch 5,
**dadurch gekennzeichnet,**
**daß** die Abzweigungen (12, 13) derart schräg verlaufen, daß sie das Substrat (5) mit einem spitzen Winkel schneiden, der kleiner als 20°, vorzugsweise kleiner als 10° ist.

7. Vorrichtung nach einem der Ansprüche 1 bis 6,
**dadurch gekennzeichnet,**
**daß** eine Steuerung für die Kühlgaszufuhr vorgesehen ist, die nur dann die Kühlgaszufuhr freigibt, wenn die Substrate auf den Trägern aufliegen.

8. Vorrichtung nach einem der Ansprüche 1 bis 7,
**dadurch gekennzeichnet,**
**daß** die Leitungen für das Kühlgas für jeden Träger separat ansteuerbar sind.

9. Vorrichtung zum Transportieren und Kühlen von scheibenförmigen Substraten (5), insbesondere von Substraten für Informationen tragende Kunststoffscheiben wie CD, DVD oder dergleichen, mit einer Platte (16) die mit einer Vielzahl von Gaszuführkanalen (17) ausgestattet ist, die in der Oberseite der Platte (16) enden und die mit einer Gaszuführung verbunden sind,
**dadurch gekennzeichnet,**
**daß** Träger (3) für die Substrate (5) vorgesehen sind, daß zwischen der Unterseite der Träger (3) und der Plattenoberfläche ein Gaskissen (15) vorgesehen ist, daß Mittel zum Bewegen der Träger (3) über das Gaskissen (15) vorgesehen sind und daß die Träger (3) Kanäle (23, 12, 13) aufweisen, die an der Unterseite der Träger (3) beginnen und im Bereich der Substrate (5) aus der Oberfläche der Träger (3) austreten.

10. Vorrichtung nach Anspruch 9,
**dadurch gekennzeichnet,**
**daß** zur Erzeugung einer bevorzugten Strömungsrichtung in dem Gaskissen (15) auf der Platte (16) die Gaszuführkanäle (17) in der Platte nicht orthogonal zur Plattenoberfläche verlaufen.

11. Vorrichtunng nach Anspruch 9 oder 10,
**dadurch gekennzeichnet,**
**daß** die Träger (3) jeweils einen Zentrierpin (4) aufweisen, der in eine entsprechend ausgebildete Ausnehmung (6) in den Substraten (5) paßt und daß die Austrittsöffnungen der Kanäle (23, 12, 13) jeweils oberhalb und unterhalb des Substrats vorgesehen sind.

12. Vorrichtung nach Anspruch 11,
**dadurch gekennzeichnet,**
**daß** in den Trägern (3) jeweils ein zentraler Kanal (23) vorgesehen ist, von dem Abzweigungen (12, 13) in dem Zentrierpin (4) oberhalb des Substrats (5) und in dem Träger (3) unterhalb des Substrats (5) radial nach außen verlaufen.

13. Vorrichtung nach Anspruch 12,
**dadurch gekennzeichnet,**
**daß** die Abzweigungen (12, 13) derart schräg verlaufen, daß sie das Substrat (5) mit einem spitzen Winkel schneiden, der kleiner als 20°, vorzugsweise kleiner als 10° ist.

14. Vorrichtung nach einem der Ansprüche 9 bis 13,
**dadurch gekennzeichnet,**
**daß** die Platte (16) als U-förmige Schiene ausgebildet ist, und daß die Träger (3) zwischen den Schenkeln (19, 20) dieser Schiene geführt sind, wobei die Träger (3) vorzugsweise einen kreisförmigen Fuß (21) aufweisen, dessen Durchmesser im wesentlichen dem Abstand der Schenkel (19, 20) entspricht.

15. Vorrichtung nach einem der Ansprüche 9 bis 14,
**dadurch gekennzeichnet,**
**daß** die Träger (3) einen tellerartigen Fuß (21) aufweisen, daß Substratentnahmepositionen vorgesehen sind, und daß die Platte (16) an diesen Positionen als Schiene mit einer auf dem Kopf stehenden T-nutenförmigen Ausnehmung ausgestaltet ist, so daß der Fuß (21) der Träger an den Substratentnahmepositionen in vertikaler Richtung fixiert ist.

16. Vorrichtung nach einem der Ansprüche 9 bis 14,
**dadurch gekennzeichnet,**
**daß** die Träger (3) in einer Reihe angeordnet sind.

## Claims

1. Device for conveying and cooling disc-shaped substrates (5), in particular substrates for information carrying plastic discs such as CDs, DVDs or the like, comprising a conveying beam (1) equipped with carriers (3) for the substrates (5) and a conveying frame (2, 2a, 2b) which beam and frame can be moved horizontally and vertically relative to one another, the substrates (5) lying alternately on the carriers (3) and on the conveying frame (2, 2a, 2b) during the vertical movement and the substrates being conveyed by the horizontal movement, **characterised in that** the carriers (3) are provided with lines (11, 12, 13) for a cooling gas and **in that** these lines are connected to a central cooling gas supply.

2. Device according to claim 1, **characterised in that** the lines (11, 12, 13) of the carriers (3) are connected to a collecting line (10) which is attached to the conveying beam (1) or is formed as a collecting duct inside the conveying beam.

3. Device according to claim 2, **characterised in that** the lines (11, 12, 13) of the carriers (3) are ducts (11, 12, 13) extending in the carriers and issuing from the surface in the region of the bearing face of the substrates (5) and connected to the collecting line (10) in the base region of the carriers (3).

4. Device according to any one of claims 1 to 3, **characterised in that** the carriers (3) each have a locating pin (4) which fits into a correspondingly formed recess (6) in the substrates (5) and **in that** outlet apertures for the cooling gas are provided above and below the substrate (5) respectively.

5. Device according to claim 4, **characterised in that** a central duct (11) is provided in the carriers (3), from which duct (11) branches (12, 13) extend radially outwardly in the locating pin (4) above the substrate (5) and in the carrier (3) below the substrate (5).

6. Device according to claim 5, **characterised in that** the branches (12, 13) extend obliquely in such a way that they intersect the substrate (5) at an acute angle which is smaller than 20°, preferably smaller than 10°.

7. Device according to any one of claims 1 to 6, **characterised in that** a controller is provided for the cooling gas supply which controller only releases the cooling gas supply when the substrates rest on the carriers.

8. Device according to any one of claims 1 to 7, **characterised in that** the lines for the cooling gas can be controlled separately for each carrier.

9. Device for conveying and cooling disc-shaped substrates (5), in particular substrates for information carrying plastic discs such as CDs, DUDS or the like, comprising a plate (16) equipped with a plurality of gas supply ducts (17) ending in the top of the plate (16) and connected to a gas supply, **characterised in that** carriers (3) are provided for the substrates (5), **in that** a gas cushion (15) is provided between the bottom of the carriers (3) and plate surface, **in that** means for moving the carriers (3) over the gas cushion (15) are provided and **in that** the carriers (3) have ducts (23, 12, 13) starting at the bottom of the carriers (3) and issuing from the surface of the carriers (3) in the region of the substrates (5).

10. Device according to claim 9, **characterised in that** the gas supply ducts (17) in the plate do not extend orthogonally to the plate surface to produce a preferred flow direction in the gas cushion (15) on the plate (16).

11. Device according to claim 9 or 10, **characterised in that** the carriers (3) each have a locating pin (4) which fits into a correspondingly formed recess (6) in the substrates (5) and **in that** the outlet apertures of the ducts (23, 12, 13) are provided above and below the substrate respectively.

12. Device according to claim 11, **characterised in that** a respective central duct (23) is provided in the carriers (3), from which duct (23) branches (12, 13) extend radially outwardly in the locating pin (4) above the substrate (5) and in the carrier (3) below the substrate (5).

13. Device according to claim 12, **characterised in that** the branches (12, 13) extend obliquely in such a way that they intersect the substrate (5) at an acute angle which is smaller than 20°, preferably smaller than 10°.

14. Device according to any one of claims 9 to 13, **characterised in that** the plate (16) is formed as a U-shaped rail and **in that** the carriers (3) are guided between the arms (19, 20) of this rail, the carriers (3) preferably having a circular foot (21), the diameter of which substantially corresponds to the distance between the arms (19, 20).

15. Device according to any one of claims 9 to 14, **characterised in that** the carriers (3) have a plate-like foot (21), **in that** substrate removal positions are provided and **in that** the plate (16) at these positions is constructed as a rail with a recess in the form of an inverted T-shaped groove so the foot (21) of the carriers is fixed vertically at the substrate removal positions.

16. Device according to any one of claims 9 to 14, **characterised in that** the carriers (3) are arranged in a row.

## Revendications

1. Dispositif de transport et de refroidissement de substrats en forme de disque (5), notamment de substrats pour des disques de matière plastique porteurs d'informations comme des CD, DVD ou autres, avec une barre de transport (1) munie de supports (3) pour les substrats (5) ainsi qu'un cadre de transport (2, 2a, 2b) qui peuvent être déplacés horizontalement ou verticalement l'un par rapport à l'autre, les substrats (5) se trouvant alternativement sur les supports (3) ou sur le cadre de transport (2, 2a, 2b) lors du mouvement vertical et le transport des substrats (5) étant réalisé grâce au mouvement horizontal, **caractérisé en ce que** les supports (3) sont munis de conduites (11, 12, 13) pour un gaz de refroidissement et **en ce que** ces conduites sont reliées à une alimentation centrale de gaz de refroidissement.

2. Dispositif selon la revendication 1, **caractérisé en ce que** les conduites (11, 12, 13) des supports (3) sont reliées à une conduite collectrice (10) qui se trouve sur la barre de transport (1) ou est configurée comme un canal collecteur à l'intérieur de la barre de transport.

3. Dispositif selon la revendication 2, **caractérisé en ce qu'**en ce qui concerne les conduites (11, 12, 13) des supports (3) de canaux (11, 12, 13) situés à l'intérieur des supports, qui, au niveau de la surface d'appui des substrats affleurent en surface et sont reliés, au niveau du fond des supports, avec la conduite collectrice (10).

4. Dispositif selon une des revendications 1 à 3, **caractérisé en ce que** les supports (3) comportent chacun une broche de centrage (4) qui est insérée dans un évidement (6) correspondant dans les substrats (5) et **en ce que** des ouvertures de sortie pour le gaz de refroidissement sont disposées au-dessus et en dessous du substrat (5).

5. Dispositif selon la revendication 4, **caractérisé en ce que**, dans chacun des supports (3), se trouve un canal central (11) duquel partent de façon radiale vers l'extérieur des embranchements (12, 13) dans la broche de centrage (4) au-dessus du substrat (5) et dans le support (3) en dessous du substrat (5).

6. Dispositif selon la revendication 5, **caractérisé en ce que** les embranchements (12, 13) sont obliques de telle sorte qu'ils rencontrent le substrat (5) avec un angle aigu inférieur à 20°, de préférence inférieur à 10°.

7. Dispositif selon une des revendications 1 à 6, **caractérisé en ce que** soit prévue une commande pour l'alimentation en gaz de refroidissement qui ne délivre du gaz de refroidissement que lorsque les substrats se trouvent sur les supports.

8. Dispositif selon une des revendications 1 à 7, **caractérisé en ce que** les conduites pour le gaz de refroidissement peuvent être commandées séparément pour chaque support.

9. Dispositif de transport et de refroidissement de substrats en forme de disque (5), notamment de substrats pour des disques de matières plastiques porteurs de données tels que des CD, DVD ou autres, avec une plaque (16) munie de nombreux canaux d'alimentation en gaz (17) qui débouchent sur la face supérieure de la plaque (16) et sont reliés à une alimentation en gaz, **caractérisé en ce que** des supports (3) sont prévus pour les substrats (5), **en ce qu'**entre la face inférieure des supports (3) et la surface de la plaque se trouve un coussin de gaz (15), **en ce qu'**un moyen de déplacement des supports (3) sur le coussin de gaz (15) est prévu et **en ce que** les supports (3) comportent des canaux (23, 12, 13) qui commencent sur la face inférieure des supports (3) et débouchent à la surface des supports (3) au niveau des substrats (5).

10. Dispositif selon la revendication 9, **caractérisé en ce que**, pour produire une direction d'écoulement préférentielle dans le coussin de gaz (15) sur la plaque (16), les canaux d'alimentation en gaz dans la plaque ne sont pas perpendiculaires à la surface de la plaque.

11. Dispositif selon la revendication 9 ou 10, **caractérisé en ce que** les supports (3) comportent chacun une broche de centrage (4) qui est insérée dans un évidement correspondant (6) dans les substrats (5) et **en ce que** les ouvertures de sortie des canaux (22, 12, 13) sont disposées au-dessus et en-dessous du substrat.

12. Dispositif selon la revendication 11, **caractérisé en ce que**, dans chacun des supports (3) se trouve un canal central (23) duquel partent de façon radiale vers l'extérieur des embranchements (12, 13) dans la broche de centrage (4) au-dessus du substrat (5) et dans le support (3) en-dessous du substrat (5).

13. Dispositif selon la revendication 12, **caractérisé en ce que** les embranchements (12, 13) sont obliques de telle sorte qu'ils rencontrent le substrat (5) avec un angle aigu inférieur à 20°, de préférence inférieur à 10°.

14. Dispositif selon une des revendications 9 à 13, **caractérisé en ce que** la plaque (16) est configurée comme une glissière en forme de U et **en ce que** les supports (3) sont guidés entre les montants (19, 20) de cette glissière, les supports (3) comportant de préférence une embase circulaire (21) dont le diamètre correspond à peu près à la distance entre les montants (19, 20).

15. Dispositif selon une des revendications 9 à 14, **caractérisé en ce que** les supports (3) comportent une embase en forme de disque (21), **en ce que** des positions d'enlèvement des substrats soient prévues et **en ce que** la plaque (16) configurée comme une glissière, soit munie, au niveau de ces positions, d'un évidement sous forme d'une rainure ayant la forme d'un T posé la tête en bas, de telle sorte que l'embase (21) des supports soit fixée verticalement au niveau des positions d'enlèvement des substrats.

16. Dispositif selon une des revendications 9 à 14, **caractérisé en ce que** les supports (3) sont disposés en ligne.
